# EUROPEAN PATENT SPECIFICATION

(11) **EP 2 170 593 B1**
(45) Date of publication and mention of the grant of the patent: **28.09.2011**
(21) Application number: 07804553.1
(22) Date of filing: 29.06.2007
(51) Int. Cl.: B29D 30/30, B65H 5/16

(54) **PROCESS AND APPARATUS FOR MANUFACTURING TYRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL POUR FABRIQUER DES PNEUS POUR DES ROUES DE VÉHICULE

(43) Date of publication of application: 07.04.2010
(73) Proprietor: Pirelli Tyre S.P.A., 20126 Milan (IT)
(72) Inventor: AMURRI, Cesare, I-20126 Milan (IT); LO PRESTI, Gaetano, I-20126 Milano (IT); MANCINI, Gianni, I-20126 Milano (IT); MARCHINI, Maurizio, I-20126 Milano (IT)
(74) Representative: Castiglia, Paolo
(86) International application number: PCT/IB2007/001804
(87) International publication number: WO 2009/004396

(56) References cited:
- EP-A- 0 443 151
- EP-A- 0 714 758
- EP-A- 0 956 940
- EP-A- 1 010 651
- EP-A- 1 588 832
- EP-A- 1 595 693
- EP-A- 1 698 490
- EP-A- 1 759 892
- EP-A2- 1 145 835
- EP-A2- 1 650 014
- DE-A1- 2 740 609
- JP-A- 2003 251 711
- US-A1- 2003 051 794

## Description

The present invention relates to a process for manufacturing tyres for vehicle wheels.

The invention also relates to an apparatus for the deposition of a reinforcing structure on a substantially cylindrical forming support in the building step of a carcass structure of a tyre for vehicle wheels, said apparatus being usable in carrying out the above process.

A tyre for vehicle wheel generally comprises a carcass structure comprising at least one carcass ply comprised of reinforcing cords incorporated in an elastomeric matrix. The carcass ply has end edges respectively engaged with annular anchoring structures arranged in the zones usually identified with the name of "beads" and normally consisting each of a substantially circumferential annular insert on which at least one filling insert is applied, in a radially outer position thereof. Such annular structures are commonly identified as "bead cores" and have the task of keeping the tyre well fixed to the anchoring seat specifically provided in the rim of the wheel, thus preventing, in operation, the radially inner end edge of the tyre coming out from such seat.

At the beads specific reinforcing structures may be provided having the function of improving the torque transmission to the tyre. The region of the bead, indeed, is particularly active in the torque transmission from the rim to the tyre in acceleration and braking, and therefore the provision of appropriate reinforcing structures in such an area ensures that the torque transmission occurs with the maximum possible reactivity.

In a radially outer position with respect to the carcass ply, a belt structure comprising one or more belt layers is associated, said belt layer being arranged radially one on top of the other and having textile or metal reinforcing cords with crossed orientation and/or substantially parallel to the direction of circumferential extension of the tyre.

Between the carcass structure and the belt structure a layer of elastomeric material, known as "under-belt", can be provided, said layer having the function of making the radially outer surface of the carcass structure as uniform as possible for the subsequent application of the belt structure.

In a radially outer position with respect to the belt structure a tread band is applied, also made from elastomeric material like other structural elements making up the tyre.

Between the tread band and the belt structure a so-called "under-layer" of elastomeric material can be arranged, said layer having properties suitable to ensure a steady union of the tread band itself.

On the side surfaces of the carcass structure respective sidewalls of elastomeric material are also applied, each extending from one of the side edges of the tread band up to the respective annular anchoring structure to the beads.

Throughout the present description and in the following claims, the term "reinforcing element" is used to indicate an element comprising one or more thread-like reinforcing elements substantially parallel to one another, such as textile or metal cords, incorporated in, or coated with, a layer of elastomeric material.

The term: "elastomeric material" on the other hand is used to indicate a composition comprising at least one elastomeric polymer and at least one reinforcing filler. Preferably, such composition further comprises additives such as, for example, a cross-linking agent and/or a plasticizer. Thanks to the provision of the cross-linking agent, such material can be cross-linked by heating, so as to make the end product.

Throughout the present description and in the following claims, moreover, considering that the reinforcing element is a substantially two-dimensional element (that is, of negligible thickness compared to the other dimensions thereof) the length of the reinforcing element is measured at the longest side thereof whereas the width is measured at the shortest side thereof.

Conventional processes for manufacturing tyres for vehicle wheels essentially provide for the components of the tyre listed above to be firstly made separately from one another, to be then assembled in a subsequent building step of the tyre.

Nevertheless, the current tendency is that of using manufacturing processes that allow the production and storage of semi-finished products to be minimised, or possibly eliminated. In such processes, each component of the tyre is directly formed on a forming support, for example as illustrated in EP 0 928 680 in the name of the same Applicant.

EP 1010651 discloses a device for transporting material strips made of rubber or rubber-like synthetic material and for depositing such material strips on an installation drum for pneumatic tires or its parts. The advancing material strips are cut to length from an endless material and positioned on a pattern table. The device contains pivotable receptacle devices that can be displaced in a transport direction which is essentially tangential to the surface of the installation drum to transport the material strips from the pattern table to the installation drum.

EP 0443151 discloses an apparatus for supplying a flexible component onto a curved apparatus for subsequent treatment, for example for supplying a bandage-like reinforcing insert onto a tire buildup drum. A vacuum hose, to which a vacuum can be supplied, is provided for gripping the flexible component. Lifting cylinders are provided for raising and lowering the vacuum hose.

EP 0 956940 discloses a method and apparatus for forming a tire reinforcing layer on an outer peripheral surface of a rigid core, in which ribbon pieces each comprised of parallel rubber-coated cords are successively adhered on the outer peripheral surface of the core in a circumferential direction thereof, with the side edges of the ribbon pieces in close contact with those of adjacent ribbon pieces.

EP 0714758 discloses a method and an apparatus for supplying sheet-like materials cut into a predetermined size to a building drum. A first sheet-like material to be assembled is supplied onto a conveyor belt. Another sheet-like material to be assembled, which is held on a transfer drum, is laminated onto the first material on the conveyor belt sequentially from one of the end sides thereof to the other with press by rotating and moving the transfer drum. Then a laminate body comprising all the aforementioned sheet-like materials is wound on the building drum.

Further methods of building a tire carcass are disclosed in EP 1 145 835 A2 and EP 1 650 014 A1.

JP2006-205769 describes a process for manufacturing a reinforcing structure of the bead region of the tyre, wherein such reinforcing structure is obtained in the form of a strip-like element by reciprocally joining a plurality of reinforcing elements obtained cutting to size band-like pieces from a continuous band-like element which incorporates metal reinforcing elements. In the strip-like element, the reinforcing elements are arranged so that the metal elements incorporated therein are oriented according to an inclined direction with respect to the longitudinal direction of the strip-like element. The strip-like element is then wound in a coil to be then cut to size and deposited on a cylindrical forming support of the tyre. According to an embodiment described in the above document, a sheet of elastomeric material is made by arranging a plurality of cords in the same direction and coating them with elastomeric material. Said sheet is then repeatedly cut along the direction of the cords to obtain band-like pieces having a parallelogram shape. A ring-shaped sheet of reinforcing material is then formed by sequentially attaching each band-like piece along a circumference defined on a side surface of a tyre being formed in toroidal configuration, the band-like piece being deformed in such a way that the length of an outer peripheral portion of the sheet of reinforcing material forms a curve arc longer than the length of the inner peripheral portion of the sheet of reinforcing material. The same document, finally, illustrates an embodiment wherein each band-like piece is attached, without being deformed, to a portion defined on the same circumference corresponding to the portion of the bead of the tyre being formed in toroidal configuration.

The Applicant has noted that, in the manufacturing process described above, and if cylindrical forming supports are used, in order to obtain a reinforcing structure with a desired extension the section of the strip-like element at which the cut must be made essentially depends on the fitting diameter of the tyre. It is therefore possible that the cut of the strip-like element occurs at an intermediate section of a band-like piece, thus obtaining a reinforcing structure consisting of a plurality of band-like pieces of the same length except one. This could cause an undesired lack of homogeneity and/or non-uniformity of the reinforcing structure.

The Applicant has further noted that the manufacturing process described above requires the manufacturing of a specific type of strip-like element for any desired fitting and/or for any required geometry. This is particularly disadvantageous in the case of low manufacturing batches, in particular if cylindrical forming supports are used.

The Applicant has perceived the need of manufacturing a tyre that, at the bead region, is provided with a reinforcing structure having uniformity and homogeneity features, by a process which ensures wide margins of usage flexibility, even in the case of low manufacturing batches and even in the presence of complex design geometries of the tyre itself.

The Applicant has found that it is possible to manufacture tyres having the above features, keeping the utmost flexibility in terms of fitting of the tyres, angle of inclination of the reinforcing elements making up the reinforcing structure, width of the same reinforcing structure, while preventing the formation of possible faults on the tyre, such as for example undesired superimpositions between the contiguous portions of the reinforcing elements, by associating, at at least one end edge of a carcass ply arranged on a substantially cylindrical forming support, a reinforcing structure comprising a predetermined number of reinforcing elements having a predetermined width and same length.

Therefore, in a first aspect thereof, the present invention relates to a process for manufacturing tyres for vehicle wheels, according to claim 1.

Advantageously, the process of the present invention allows manufacturing a tyre having, at the bead region, a reinforcing structure substantially homogenous and even and free from undesired overlapped joined ends, ensuring the utmost flexibility in terms of tyre fitting, angle of inclination of the reinforcing elements and width of the reinforcing structure. The homogeneity and uniformity of the reinforcing structure are achieved by a sequential deposition and without superimpositions of a predetermined number of reinforcing elements all having the same length and width.

It is therefore possible to manufacture a tyre reinforced at the bead region having high quality levels and, as a consequence, high performance.

In a second aspect thereof, the present invention relates to an apparatus for the deposition of a reinforcing structure on a substantially cylindrical forming support in the building step of a carcass structure of a tyre for vehicle wheels, according to claim 16.

Advantageously, such apparatus allows carrying out the process of the present invention in a first preferred embodiment thereof, described in detail hereinafter.

In a third aspect thereof, the present invention relates to an apparatus for the deposition of a reinforcing structure on a substantially cylindrical forming support in the steps of building a carcass structure of a tyre for vehicle wheels, according to claim 20.

Advantageously, such apparatus allows carrying out the process of the present invention in a second preferred embodiment thereof, described in detail hereinafter.

The present invention, in at least one of the aforementioned aspects thereof, can have at least one of the following preferred features.

In the preferred embodiments of the present invention, the aforementioned reinforcing elements are obtained by cutting to size at least one continuous band-like reinforcing element of predetermined width. Thus, in such embodiments the apparatus described above with reference to the second and third aspect of the present invention comprises, upstream of said grasping device, a device for feeding a continuous band-like reinforcing element having a predetermined width and a cutting device for cutting to size, with a predetermined cutting angle, said reinforcing elements from said continuous band-like reinforcing element.

Throughout the present description and in the following claims, "cutting angle" (α) is used to indicate the acute angle formed between the cutting direction and the longitudinal direction of the continuous band-like reinforcing element.

Advantageously, the cut to size allows obtaining a plurality of reinforcing elements of equal dimensions.

More advantageously, cutting to size the band-like reinforcing element with a predetermined cutting cadence and rotating the reinforcing elements thus obtained by 90°-α about an axis perpendicular to a lying plane of said reinforcing elements it is possible to obtain reinforcing elements of identical length (equal to the width of the band-like reinforcing element if the cut is made along a direction perpendicular to the longitudinal direction of the continuous band-like reinforcing element, that is, with a cutting angle equal to 90°) and same width (equal to the advancement distance covered by the continuous band-like reinforcing element between two consecutive cuts).

According to first preferred embodiments of the present invention, the length of said reinforcing element (or the width of said band-like reinforcing element if the cutting angle is equal to 90°) is more than about 1 mm.

According to other particularly preferred embodiments of the present invention, the length of said reinforcing element (or the width of said band-like reinforcing element if the cutting angle is equal to 90°) is more than about 30 mm.

According to further preferred embodiments of the present invention, the length of said reinforcing element (or the width of said band-like reinforcing element if the cutting angle is equal to 90°) is less than about 100 mm.

According to other preferred embodiments of the present invention, the length of said reinforcing element (or the width of said band-like reinforcing element if the cutting angle is equal to 90°) is less than about 60 mm.

According to further preferred embodiments of the present invention, the length of said reinforcing element (or the width of said band-like reinforcing element if the cutting angle is equal to 90°) is comprised between about 1 mm and about 100 mm.

According to even further preferred embodiments of the present invention, the length of said reinforcing element (or the width of said band-like reinforcing element if the cutting angle is equal to 90°) is comprised between about 30 mm and about 60 mm.

Advantageously, the Applicant has verified that with the above length values of the reinforcing elements (or width values of the band-like reinforcing element if the cutting angle is equal to 90°) it is possible to handle fitting changes well. In particular, the Applicant has found that with a single continuous band-like reinforcing element having a width equal to π expressed in inches, or to a submultiple thereof, and keeping constant the distance between the various reinforcing elements that make up the reinforcing structure, it is possible to handle possible fitting changes each time changing the predetermined number of reinforcing elements that make up the above reinforcing structure simply by one or more units. It is therefore possible to form any reinforcing geometry with an integer of reinforcing elements equal to one another, starting from a single type of continuous band-like reinforcing element.

For example, assuming a cutting angle equal to 90° and a width of the continuous band-like reinforcing element (in this case corresponding to the length of the reinforcing elements) equal to π inches (about 81 mm), when the fitting diameter increases by 1 inch the number of reinforcing elements must be increased by one unit.

In some embodiments of the present invention, the distance between the reinforcing elements in the reinforcing structure along the deposition path is null. In that case, the reinforcing elements are placed side by side but with no reciprocal superimposition.

In the preferred embodiments of the present invention, the distance between the reinforcing elements in the reinforcing structure along the deposition path is greater than zero.

According to particularly preferred embodiments of the present invention, the above distance has a value comprised between 0 and about 15 mm divided by the number of reinforcing elements that define the reinforcing structure.

Moreover, in the preferred embodiments of the present invention, the cutting angle is greater than zero.

In other embodiments of the present invention, the cutting angle is greater than about 15°.

In further other embodiments of the present invention, the cutting angle is greater than about 20°.

In further embodiments of the present invention, the cutting angle is less than about 90°.

In still further embodiments of the present invention, the cutting angle is less than about 50°.

According to some preferred embodiments of the present invention, the cutting angle is comprised between about 15° and about 90°.

According to other preferred embodiments of the present invention, the cutting angle is comprised between about 20° and about 50°.

With reference to the cutting angle, the Applicant has verified that possible big changes of such angle that determine a variation in the length of the reinforcing element can be advantageously absorbed by changing the number of reinforcing elements that make up the reinforcing structure. In fact, in the case of cutting angle equal to 90° the length of the reinforcing element is equal to the width of the continuous band-like reinforcing element, whereas if the cutting angle is less than 90° the length of the reinforcing element is greater than the width of the continuous band-like reinforcing element. If the cutting angle is much less than 90°, it is possible to obtain the same circumferential extension, being equal the distance between reinforcing elements, decreasing the number of reinforcing elements that make up the reinforcing structure.

The position of the reinforcing elements on the end edge of the carcass ply can be different in relation to the position of the annular anchoring structures.

In particular, in a first embodiment of the present invention, the reinforcing elements are arranged on the end edge of the carcass ply in an axially internal position with respect to a respective annular anchoring structure.

In alternative embodiments of the present invention, the reinforcing elements are arranged on the end edge of the carcass ply in an axially external position with respect to a respective annular anchoring structure.

In this last case, embodiments are provided wherein the reinforcing structure is arranged on said at least one end edge of said at least one carcass ply, at an end portion of the carcass ply adapted to be turned up for forming a substantially slipknot-wise portion, before said end portion is turned up. In such embodiments, therefore, the reinforcing structure is arranged internally to the substantially slipknot-wise portion of the carcass ply.

In any case, embodiments are provided as an alternative to that described above wherein the reinforcing structure is arranged on said at least one end edge of said at least one carcass ply, at the end portion of the carcass ply adapted to be turned up for forming a substantially slipknot-wise portion, after said end portion has been turned up. In these embodiments the reinforcing structure is arranged externally to the substantially slipknot-wise portion of the carcass ply.

In a first particularly preferred embodiment of the present invention, the reinforcing structure is formed by the steps of:
- cutting to size a reinforcing element from said continuous band-like reinforcing element;
- depositing said reinforcing element at a deposition path defined on said at least one end edge of said at least one carcass ply;
- repeating said cutting and deposition steps by a predetermined number of times each time moving the substantially cylindrical forming support by a pitch equal to the sum of the length of said reinforcing element and of said predetermined distance along said deposition path so as to deposit a predetermined number of reinforcing elements on said deposition path.

Advantageously, in this embodiment the reinforcing structure is directly formed on the substantially cylindrical forming support by sequentially depositing the reinforcing elements one after the other along the predetermined deposition path.

Preferably, the deposition path extends along an annular portion of the substantially cylindrical forming support having a substantially circular shape and centre laying on an axis of rotation of the substantially cylindrical forming support.

More preferably, the deposition step of each reinforcing element on the end edge of the carcass ply comprises the step of providing, in an axially external position with respect to the substantially cylindrical forming support, an auxiliary element for supporting an axially external end portion of the reinforcing element projecting from a previously turned up end portion of the carcass ply for forming a substantially slipknot-wise portion containing at least one annular anchoring structure therein.

Even more preferably, the step of depositing said at least one reinforcing element further comprises the step of moving each reinforcing element from a first position at the continuous band-like reinforcing element to a second position at the substantially cylindrical forming support.

In a second particularly preferred embodiment of the present invention, the reinforcing structure is formed by the steps of:
- cutting to size a reinforcing element from said continuous band-like reinforcing element;
- depositing said reinforcing element at a deposition path defined on an assembling belt;
- repeating said cutting and deposition steps by a predetermined number of times each time moving said assembling belt by a pitch equal to the sum of the length of said reinforcing element and of said predetermined distance along said deposition path so as to deposit a predetermined number of reinforcing elements on said deposition path, thus forming said reinforcing structure on said assembling belt;
- placing said assembling belt close to said substantially cylindrical forming support;
- moving said assembling belt at a predetermined linear speed and said substantially cylindrical forming support at a predetermined peripheral speed substantially equal to said predetermined linear speed;
- transferring said reinforcing structure from said assembling belt to said substantially cylindrical forming support.

Advantageously, in this embodiment the reinforcing structure is formed on the assembling belt by sequentially depositing the reinforcing elements one after the other along the predetermined deposition path, to be then transferred onto the forming support.

Preferably, the deposition path extends in this case along the assembling belt according to a substantially rectilinear direction.

More preferably, the step of transferring the reinforcing structure from the assembling belt to the substantially cylindrical forming support comprises the step of providing, in a position axially external to the substantially cylindrical forming support, an auxiliary element for supporting an axially external annular portion of the reinforcing structure projecting from an end portion of the carcass ply previously turned up for forming a substantially slipknot-wise portion containing at least one annular anchoring structure therein.

Even more preferably, the step of depositing the reinforcing element further comprises the step of moving the reinforcing element from a first position at the continuous band-like reinforcing element to a second position at the assembling belt.

In the embodiments of the present invention wherein the reinforcing structure is formed on the assembling belt, the continuous band-like reinforcing element comprises, at each longitudinal edge thereof, a rubber element.

Advantageously, such rubber element will serve as adhesive between the various adjacent reinforcing elements, so as to allow better handling of the reinforcing structure during the transfer from the assembling belt to the forming support.

Preferably, in all the aspects of the present invention, the continuous band-like reinforcing element comprises at least one thread-like reinforcing element incorporated in an elastomeric material.

In all the preferred embodiments of the present invention, during the step of grasping and moving the reinforcing element, this is rotated by a predetermined angle about an axis perpendicular to a lying plane thereof. In this way, when the reinforcing structure consisting of the various reinforcing elements is associated with the carcass ply, the thread-like reinforcing elements incorporated in the various reinforcing elements are advantageously oriented along a non circumferential direction.

Preferably, such angle is equal to about 90° minus the cutting angle.

In all the preferred embodiments of the present invention, moreover, once the reinforcing elements are associated with the end edge of the carcass ply, a consolidation pressing member is preferably made to pass on the reinforcing elements.

Advantageously, this further step ensures that the deposited reinforcing elements adhere perfectly to the underlying structures of the tyre being processed, and at the entire surface thereof.

In the preferred aspects of the present invention, the grasping device is movable with respect to the feeding device and to the cutting device according to two translation directions substantially perpendicular to each other. The grasping device is further movable from a first position in the proximity of the cutting device to a second position in the proximity of the aforementioned substantially cylindrical forming support or in the proximity of the aforementioned assembling belt, according to the specific embodiment of the present invention.

Preferably, the grasping device comprises a suction cup holding device or, as an alternative, an electromagnet holding device for allowing grasping the reinforcing elements and keeping such grasp during the movement from the feeding device to the substantially cylindrical forming support or to the assembling belt.

In the preferred embodiments of the present invention, the cutting device comprises a device for adjusting the cutting angle.

In all the preferred embodiments thereof, the apparatus of the present invention further comprises a device for rotating the grasping device about an axis substantially perpendicular to the lying plane of the reinforcing elements to be deposited on the substantially cylindrical forming support or on the assembling belt.

Preferably, the apparatus of the present invention also comprises an auxiliary element for supporting an axially external end portion of the reinforcing element, or an axially external annular portion of the reinforcing structure if this has been previously made on the above assembling belt, projecting from an end portion of the carcass ply previously turned up for forming a substantially slipknot-wise portion containing at least one annular anchoring structure therein.

A pressing member is further preferably provided, this pressing member being adapted to exert a pressure on the reinforcing elements associated with the aforementioned end edge of the carcass ply.

Further features and advantages of the present invention will appear more clearly from the following detailed description of some preferred embodiments of an apparatus and process according to the present invention, made with reference to the attached drawings. In such drawings:
- figure 1 is a schematic view of an embodiment of an apparatus that carries out a process according to the present invention;
- figure 2 is a schematic view of an alternative embodiment of an apparatus that carries out a process according to the present invention;
- figure 3a is a schematic and partially cutaway view of a longitudinal section of a forming support in a deposition step of a first embodiment of the process of the present invention;
- figure 3b is an enlarged view of an end portion of the forming support of figure 3a in a process step subsequent to that shown in figure 3a;
- figure 4a is a schematic and partially cutaway view of a longitudinal section of a forming support in a deposition step of a second embodiment of the process of the present invention;
- figure 4b is an enlarged view of an end portion of the forming support of figure 4a in a process step subsequent to that shown in figure 4a;
- figure 5a is a schematic and partially cutaway view of a forming support in a deposition step of a third embodiment of the process of the present invention;
- figure 5b is an enlarged view of an end portion of the forming support of figure 5a in a process step subsequent to that shown in figure 5a;
- figure 6a is a schematic and partially cutaway view of a forming support in a deposition step of a fourth embodiment of the process of the present invention;
- figure 6b is an enlarged view of an end portion of the forming support of figure 6a in a process step subsequent to that shown in figure 6a that carries out a process according to the present invention.

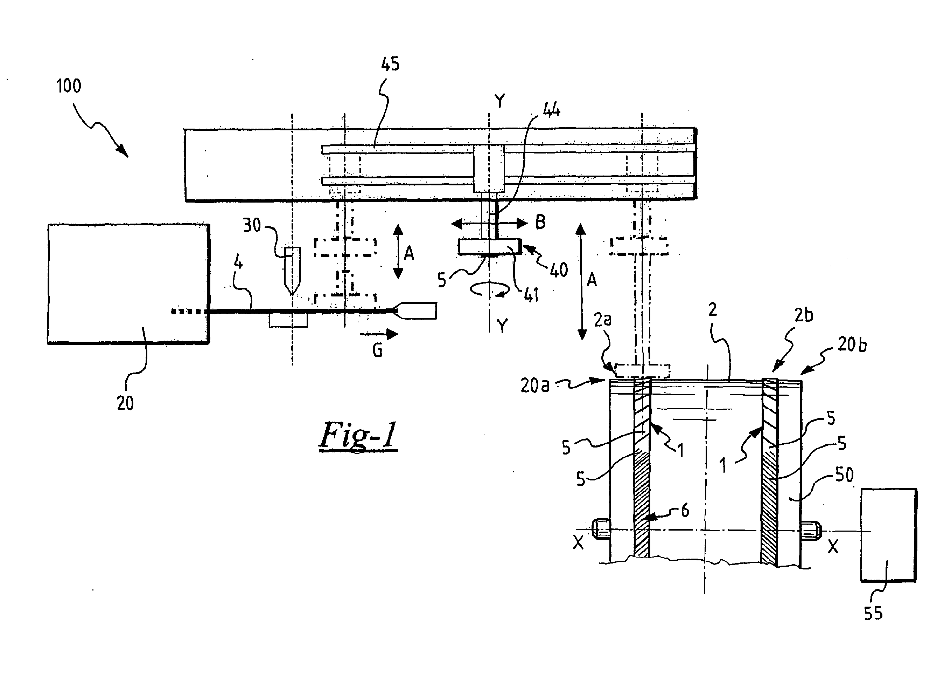

In figure 1, reference numeral 100 globally indicates an exemplifying embodiment of an apparatus for manufacturing a reinforcing structure 1 of the bead region of a tyre for vehicle wheels, according to an embodiment of the process of the present invention.

In particular, in the example of embodiment shown in figure 1, apparatus 100 allows manufacturing a reinforcing structure 1 operatively associated with opposite end edges 2a, 2b of a carcass ply 2, previously arranged on a substantially cylindrical forming support 50, at respective axial end zones of said ply 2 defining the bead region of the tyre.

The reinforcing structure 1 is conveniently made directly on the forming support 50 in a building step of a carcass structure. Such building step comprises a step of providing the carcass ply 2 on the forming support 50 and then, the step of depositing on the carcass ply 2 one or more reinforcing structures 1 and one or more annular anchoring structures 3 (bead cores) adapted to keep the tyre well fixed to the anchoring seat specifically provided in the rim of the wheel.

The specific axial position of each layer of the reinforcing structure 1 with respect to the annular anchoring structures 3 may vary according to the use and to the features of the tyre to be manufactured. In particular, the reinforcing structure 1 can comprise a single reinforcing layer directly made on the carcass ply 2 in a position axially internal to an annular anchoring structure 3, or arranged between two layers of annular anchoring structures 3, or yet provided in a position axially external to the annular anchoring structures 3. It is further possible to provide a reinforcing structure 1 comprising multiple reinforcing layers operatively associated in different axial positions with the annular anchoring structures 3.

Throughout this description, reference is made for simplicity of description to a reinforcing structure comprising a single reinforcing layer. The terms "reinforcing structure" and "reinforcing layer" will therefore be used in a interchangeable way.

Each reinforcing layer of the reinforcing structure 1 is defined by a predetermined integer number of reinforcing elements 5 having the same length and width, deposited one after the other on the forming support 50 along a substantially circular deposition path defined on each end edge 2a, 2b of the carcass ply 2 and having their centre laying on the axis of rotation of the forming support 50.

The reinforcing elements 5 are obtained by operations for cutting to size at least one continuous band-like reinforcing element 4 extending along a longitudinal extension direction indicated in figure 1 with G.

The continuous band-like reinforcing element 4 preferably comprises a plurality of thread-like reinforcing elements 6 of metal or textile material incorporated in a matrix of elastomeric material. Such reinforcing thread-like elements 6 extend parallel to one another along the longitudinal extension direction G of the continuous band-like reinforcing element 4.

The continuous band-like reinforcing element 4 is fed along the longitudinal extension direction G thereof by a special feeding device 20. Such device can comprise a device for in-line preparing the continuous band-like reinforcing element 4, such as a drawing and/or calendering device, or a coil for gathering the continuous band-like reinforcing element 4. In this last case the continuous band-like reinforcing element 4 is prepared in a central system upstream of the coil.

Downstream of the feeding device 20 there is provided a cutting device 30 adapted to carry out the sequential operations of cutting to size the continuous band-like reinforcing element 4 for obtaining the reinforcing elements 5. The cutting device 30 acts on the continuous band-like reinforcing element 4 with a predetermined cutting frequency, along a cutting direction that, on the lying plane of the continuous band-like reinforcing element 4, defines with the longitudinal direction of the continuous band-like reinforcing element 4 a predetermined cutting angle α comprised between 0 and a predetermined value. In the preferred embodiments of the process carried out by apparatus 100, the cutting angle α is set to a value greater than zero, preferably comprised between about 15° and about 90°, more preferably between about 20° and about 50°.

Downstream of the cutting device 30 there is provided a device 40 for grasping the reinforcing elements 5 for the subsequent deposition on the forming support 50, so as to make the reinforcing structure 1 on such forming support 50.

The grasping device 40 comprises a moving arm 44 sliding along tracks 45 between a first position in the proximity of the cutting device 30, wherein the reinforcing elements 5 are grasped, and a second position in the proximity of the forming support 50, wherein the reinforcing elements 5 are deposited on the forming support 50. The grasping device 40 is moved between these two positions according to two translation directions substantially perpendicular to one another, indicated in figure 1 by dual arrows A and B.

The grasping device 40 is preferably provided with a suction cup, or alternatively electromagnet (if the thread-like reinforcing elements 6 are of metal material) holding device 41, for capturing the reinforcing element 5 and moving it from the aforementioned first position to the aforementioned second position. A device adapted to allow a rotation, preferably equal to 90°-α, of the above grasping device 40 during the movement thereof from the aforementioned first position to the aforementioned second position is further provided. Thanks to such rotation, the thread-like reinforcing elements 6 of each reinforcing element 5 deposited on the forming support 50 are oriented parallel to each other and obliquely with respect to the circumferential extension direction of the forming support 50 (figure 1), with an inclination that is determined by the specific method of cutting and joining the reinforcing elements 5.

The forming support 50 is rotatably mounted about an axis of rotation X-X between a mandrel and a centre of a service station (not shown). During the deposition of the reinforcing elements 5 that form the reinforcing structure 1, the forming support 50 is moved in rotation about axis X-X with a predetermined peripheral speed and angular positions settable by a special moving device, schematically indicated with reference numeral 55 in figure 1.

In particular, during the deposition of the reinforcing elements 5 the above moving device 55 drives in rotation the forming support 50 about its axis of rotation X-X by an angle corresponding to a predetermined circumferential pitch, so as to allow the deposition on the forming support of a predetermined integer number of reinforcing elements 5, while preventing reciprocal superimpositions between adjacent reinforcing elements 5.

The reinforcing elements 5 can be arranged one after the other in side-by-side relationship (that is, without leaving any space between a reinforcing element 5 and the next one) or providing a space therebetween. Preferably, if D is the fitting diameter, the predetermined integer number of reinforcing elements 5 deposited on the forming support 50 multiplied by the length of the reinforcing elements 5 is made to be equal to πD minus a predetermined value that preferably varies from 0 to 15 mm and that is uniformly distributed as a gap between adjacent reinforcing elements 5. In other words, each reinforcing element 5 is made to be arranged at a distance, from the reinforcing element 5 previously deposited, having a constant value comprised between 0 and 15 mm divided by the number of reinforcing elements 5.

The structure of the forming support 50 is not described in detail herein since it can be made in any convenient manner by the man skilled in the art.

If the cutting angle α is equal to 90°, the length of the reinforcing elements 5 deposited on the forming support 50 corresponds to the width of the continuous band-like reinforcing element 4. If the cutting angle α is less than 90°, the length of the reinforcing elements 5 is equal to the width of the continuous band-like reinforcing element 4 divided the sine of angle α. Preferably, the length of the reinforcing elements 5 is in any case comprised between 1 mm and 100 mm, more preferably between 30 mm and 60 mm.

The deposition apparatus 100 preferably comprises also a pressing member (not shown in the figures) of conventional type and known to the man skilled in the art, which acts on the reinforcing elements 5 deposited on the forming support 50 so as to ensure complete adhesion thereof to the underlying structures of the tyre being formed. Such pressing member may be integral with the grasping device 40 and acting on each reinforcing element 5 individually and immediately after the deposition thereof, or it can be independent from the grasping device 40 and acting on the reinforcing structure 1 once the deposition of all the reinforcing elements 5 has ended.

With reference to figure 1, a preferred embodiment of the process for manufacturing the reinforcing structure 1 that can be carried out by the deposition apparatus 100 described above will now be described.

In a first step of the process, the reinforcing element 5 is cut to size, with the predetermined cutting angle α, from the continuous band-like reinforcing element 4 fed by the feeding device 20. Typically, the cutting angle α is preset and remains constant during the whole process for manufacturing the reinforcing structure 1.

In a subsequent step, the reinforcing element 5 is grasped by the grasping device 40 and moved at the forming support 50. During such movement, the grasping device rotates by about 90°-α about an axis of rotation Y-Y perpendicular to the lying plane of the reinforcing element 5. The above rotation step is therefore preferably carried out at the same time as the reinforcing element 5 moves from the first position at the cutting device 30 to the second position at said forming support 50.

In a subsequent process step, the reinforcing element 5 is deposited on an end edge 2a, 2b of a carcass ply 2 previously deposited on the forming support 50.

The above step of cutting, moving and depositing the reinforcing element 5 are repeated a predetermined number of times, each time moving the forming support 50 by the predetermined circumferential pitch so as to deposit a predetermined integer number of reinforcing elements 5 in side-by-side relationship, or at the predetermined distance from one another, so as to cover the entire circumferential extension of the forming support 50, thus completing the formation of a reinforcing layer of the reinforcing structure 1.

Moreover, a step of passing the pressing member on the deposited reinforcing elements 5 is preferably provided.

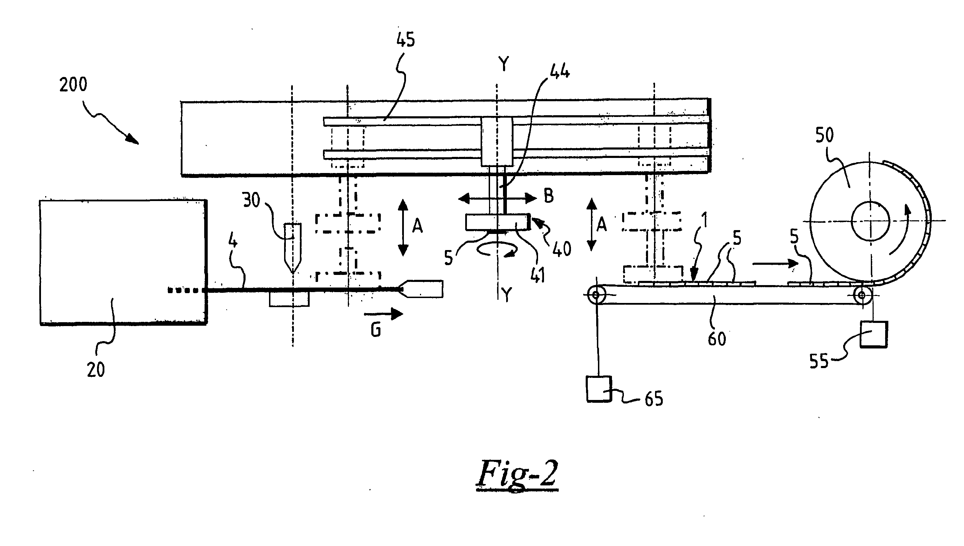

Figure 2 shows an alternative embodiment of the apparatus of the present invention, globally indicated with reference numeral 200. In such embodiment, elements identical to those described before with reference to apparatus 100 of figure 1 are indicated with the same reference numeral.

Apparatus 200 of figure 2 differs from apparatus 100 of figure 1 only in that between the grasping device 40 and the forming support 50 there is provided an assembling belt 60 whereon the reinforcing structure 1 is made. Upstream and downstream of the assembling belt 60 apparatus 200 of figure 2 is totally similar to apparatus 100 of figure 1. In particular, in the apparatus 200 of figure 2 the grasping device 40 deposit the reinforcing elements 5 along a substantially rectilinear deposition path defined on the assembling belt 60. In the deposition step, the assembling belt 60 advances, controlled by a special moving device 65, with a pitch equal to the length of the reinforcing elements 5 plus optionally the distance that is desired to be left between two adjacent reinforcing elements 5, thus forming the reinforcing structure 1 on the assembling belt 60.

The reinforcing structure 1 is then transferred on the forming support 50 moving the assembling belt 60 close to the forming support 50 and making the assembling belt 60 advance at a linear speed equal to the peripheral speed of the forming support 50.

The process carried out by apparatus 200 of figure 2 therefore is totally similar to that carried out by apparatus 100 of figure 1 described above, with the only difference that the reinforcing elements 5 are deposited on the assembling belt 60 so as to make thereon the reinforcing structure 1 that is then transferred on the forming support 50.

In the use of apparatus 200 of figure 2, the continuous band-like reinforcing element 4 is preferably provided, at each of the longitudinal edges thereof, with a rubber element that will serve as adhesive between two reinforcing elements 5 when these are deposited on the assembling belt 60 for making the reinforcing structure 1.

As already mentioned above, the axial position of the reinforcing structure 1 with respect to the annular anchoring structures 3 on the forming support 50 may be different.

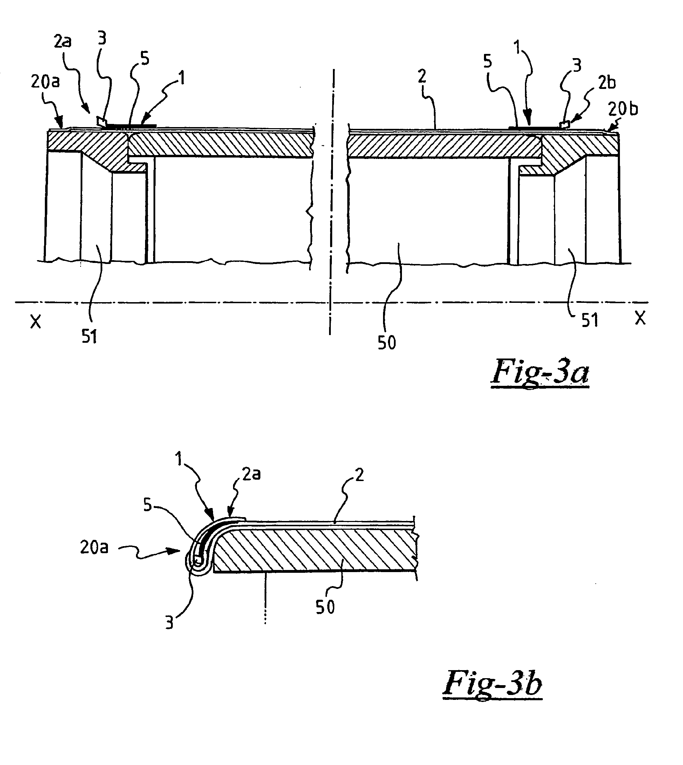

Figures 3a and 3b show two steps of a process for manufacturing a tyre wherein the reinforcing structure 1 is arranged in a axially internal position with respect to a respective annular anchoring structure 3. As shown in figure 3a, the deposition of the carcass ply 2, of the reinforcing elements 5 (or of the reinforcing structure previously formed on the assembling belt 60, if apparatus 200 of figure 2 is used) and of the annular anchoring structure 3 takes place by the aid of a support member 51 of an end portion 20a, 20b of the carcass ply 2 projecting from the forming support 50. As shown in figure 3b, the end portions 20a, 20b, once the support member 51 is moved away, are turned up so as to form the slipknot-wise portions that contain the annular anchoring structure 3 and the reinforcing structure 1 therein.

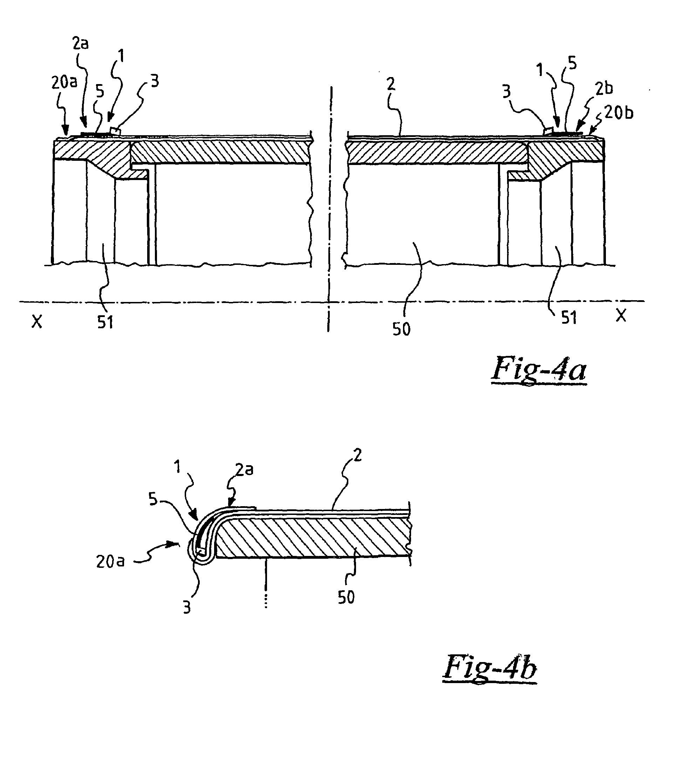

Figures 4a and 4b show two steps of a process for manufacturing a tyre wherein the reinforcing structure 1 is arranged in an axially external position with respect to a respective annular anchoring structure 3, but always within the turned up end portion 20a, 20b of the carcass ply 2. Also in this case, therefore, the deposition of the carcass ply 2, of the reinforcing elements 5 (or of the reinforcing structure previously formed on the assembling belt 60, if apparatus 200 of figure 2 is used) takes place by the aid of a support member 51 before the end portions 20a, 20b of the carcass ply 2 are turned up for forming the slipknot-wise portions containing the annular anchoring structure 3 and the reinforcing structure 1 therein.

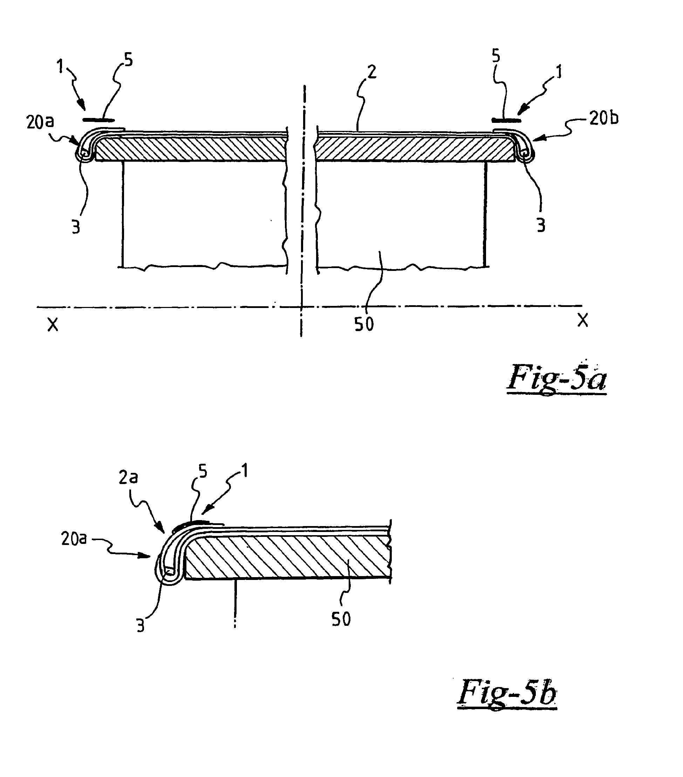

Figures 5a and 5b show two steps of a process for manufacturing a tyre wherein the reinforcing structure 1 is arranged in an axially external position with respect to a respective annular anchoring structure 3 and externally to the turned up end portions 20a, 20b of the carcass ply 2, The deposition of the carcass ply and of the annular anchoring structure 3 takes place, as in the cases of figure 3a, 3b and 4a, 4b, with the aid of the support member 51. The deposition of the reinforcing elements 5 (or of the reinforcing structure 1 previously formed on the assembling belt 60, if apparatus 200 of figure 2 is used) on the other hand takes place after the end portions 20a, 20b of the carcass ply 2 have been turned up for forming the slipknot-wise portions containing the annular anchoring structure 3 therein.

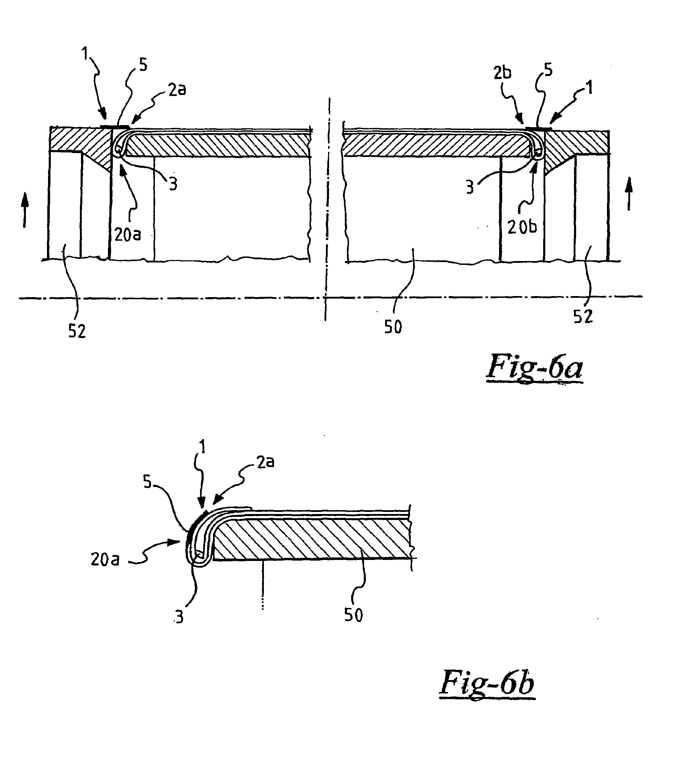

Figures 6a and 6b show two steps of a process for manufacturing a tyre wherein the reinforcing structure 1 is arranged, as in figures 5a and 5b, in an axially external position with respect to a respective annular anchoring structure 3 and externally to the turned up end portions 20a, 20b of the carcass ply 2. The process of figure 6a e 6b differs from that shown in figures 5a and 5b only in that the position of the reinforcing elements 5 (or of the reinforcing structure 1 previously formed on the assembling belt 60, if apparatus 200 of figure 2 is used) is axially more external than in figures 5a and 5b and requires the use of an auxiliary support element 52 of an outer annular portion of the reinforcing elements 5 (or of the reinforcing structure 1) projecting from the turned up end portions 2a, 2b of the carcass ply 2.

In alternative embodiments, not described herein in detail, reinforcing elements 5 ready to use, having desired structure and dimensions, may be directly provided to the grasping device 40. In this case, apparatus 100 may not comprise devices specifically designed for forming the reinforcing element 5 starting from a continuous band-like element 4, as described hereinafter, and the process of the invention may not provide specific steps intended for forming the reinforcing element 5, by this meaning that such element has been separately arranged, according to methods known to the man skilled in the art, upstream of the steps of grasping and depositing on the forming support 50 or on the assembling belt 60.

From the above description it is clear that the various embodiments of process and apparatus described above allow manufacturing a tyre having, at the bead region, a reinforcing structure 1 substantially homogeneous and uniform and free from undesired overlapped joined ends, ensuring the utmost flexibility in terms of fitting of the tyre, inclination angle of the reinforcing elements and width of the reinforcing structure, also in the case of low manufacturing batches, in the presence of complex design geometries of the tyre itself, while ensuring high quality levels and consequently, high performance. All of this is achievable by associating at the end edges 2a, 2b of the carcass ply 2 previously arranged on the substantially cylindrical forming support 50 a reinforcing structure 1 comprising a predetermined number of reinforcing elements 5 of predetermined width and same length.

In particular, the process of the present invention allows a well handling of the fitting changes starting from a single type of continuous band-like reinforcing element 4 having a predetermined width. In fact, for any fitting change it is sufficient to change the predetermined number of reinforcing elements 5 that make up the above reinforcing structure 1 and/or the distance between these reinforcing elements 5 and/or the cutting angle, in any case always using an integer number of reinforcing elements 5.

## Claims

1. Process for manufacturing tyres for vehicle wheels, comprising the step of building on a substantially cylindrical forming support (50) a carcass structure comprising at least one carcass ply (2) associated, at axially opposite end edges (2a, 2b) thereof, with respective annular anchoring structures (3), wherein the step of building the carcass structure comprises the step of associating, at at least one end edge (2a, 2b) of said at least one carcass ply (2), at least one reinforcing structure (1) comprising a predetermined number of reinforcing elements (5) having a predetermined width and same length, each of said reinforcing elements (5) comprising one or more thread-like reinforcing elements which are substantially parallel to one another and which are incorporated in, or coated with, a layer of elastomeric material, said reinforcing elements (5) being sequentially arranged along a deposition path at a distance from each other having a value comprised between 0 and a predetermined value, said deposition path extending along a circumferential direction of the forming support (50).

2. Process according to claim 1, wherein said reinforcing elements (5) are obtained by cutting to size at least one continuous band-like reinforcing element (4) having a predetermined width.

3. Process according to claim 1 or 2, wherein the length of said reinforcing elements (5) is comprised between about 1 mm and about 100 mm.

4. Process according to any one of the previous claims, wherein the length of said reinforcing elements (5) is comprised between about 30 mm and about 60 mm.

5. Process according to any one of the previous claims, wherein said distance is constant along said deposition path.

6. Process according to any one of the previous claims, wherein the value of said distance is comprised between about 0 mm and about 15 mm divided by the number of reinforcing elements (5) that define said reinforcing structure (1).

7. Process according to any one of claims from 2 to 6, wherein said cut to size is carried out with a cutting angle (α) greater than 0.

8. Process according to claim 7, wherein said cutting angle (α) is comprised between about 15° and about 90°.

9. Process according to claim 7, wherein said cutting angle (α) is comprised between about 20° and about 50°.

10. Process according to any one of the previous claims, wherein said reinforcing elements (5) are arranged on said at least one end edge (2a, 2b) of said at least one carcass ply (2) in an axially internal position with respect to a respective annular anchoring structure (3).

11. Process according to any one of claims from 1 to 9, wherein said reinforcing elements (5) are arranged on said at least one end edge (2a, 2b) of said at least one carcass ply (2) in an axially external position with respect to a respective annular anchoring structure (3).

12. Process according to claim 11, wherein said at least one end edge (2a, 2b) of said at least one carcass ply (2) comprises an end portion (20a, 20b) adapted to be turned up so as to define a substantially slipknot-wise portion comprising said annular anchoring structure (3), said reinforcing structure (1) being arranged on said end portion (20a, 20b) before said end portion (20a, 20b) is turned up.

13. Process according to claim 11, wherein said at least one end edge (2a, 2b) of said at least one carcass ply (2) comprises an end portion (20a, 20b) adapted to be turned up so as to define a substantially slipknot-wise portion comprising said annular anchoring structure (3), said reinforcing structure (1) being arranged on said end portion (20a, 20b) after said end portion (20a, 20b) has been turned up.

14. Process according to any one of claims from 2 to 13, wherein said reinforcing structure (1) is formed by the steps of:
- cutting to size a reinforcing element (5) from said continuous band-like reinforcing element (4);
- depositing said reinforcing element (5) at a deposition path defined on said at least one end edge (2a, 2b) of said at least one carcass ply (2);
- repeating said cutting and deposition steps by a predetermined number of times each time moving the substantially cylindrical forming support (50) by a pitch equal to the sum of the length of said reinforcing element (5) and of said predetermined distance along said deposition path so as to deposit a predetermined number of reinforcing elements (5) on said deposition path.

15. Process according to any one of claims from 2 to 13, wherein said reinforcing structure (1) is formed by the steps of;
- cutting to size a reinforcing element (5) from said continuous band-like reinforcing element (4);
- depositing said reinforcing element (5) at a deposition path defined on an assembling belt (60);
- repeating said cutting and deposition steps by a predetermined number of times each time moving said assembling belt (60) by a pitch equal to the sum of the length of said reinforcing element (5) and of said predetermined distance along said deposition path so as to deposit a predetermined number of reinforcing elements (5) on said deposition path, thus forming said reinforcing structure (1) on said assembling belt (60);
- placing said assembling belt (60) close to said substantially cylindrical forming support (50);
- moving said assembling belt (60) at a predetermined linear speed and said substantially cylindrical forming support (50) at a predetermined peripheral speed substantially equal to said predetermined linear speed;
- transferring said reinforcing structure (1) from said assembling belt (60) to said substantially cylindrical forming support (50).

16. Apparatus (100) for the deposition of a reinforcing structure (1) on a substantially cylindrical forming support (50) in the building step of a carcass structure of a tyre for vehicle wheels, comprising:
- a grasping device (40) for grasping a reinforcing element (5) of a plurality of reinforcing elements having a predetermined width and same length and depositing said reinforcing element (5) on an end edge (2a, 2b) of a carcass ply (2) associated with a substantially cylindrical forming support (50) of a carcass structure, said grasping device (40) being movable toward and away from said forming support (50) each time depositing on said forming support (50) a different reinforcing element (5) of said plurality of reinforcing elements in order to sequentially form on said forming support (50) a reinforcing structure (1) which covers the entire circumferential extension of said forming support (50);
- a device (55) for repeatedly moving said substantially cylindrical forming support (50) by a predetermined pitch along a predetermined deposition path each time a reinforcing element (5) of said plurality of reinforcing elements is deposited on said forming support (50) by said grasping device (40), said pitch being calculated so as to allow deposition of a predetermined number of said reinforcing elements (5) on said end edge (2a, 2b) of said at least one carcass ply (2) along said deposition path at a distance from one another having a value comprised between 0 and a predetermined value.

17. Apparatus (100) according to claim 16, comprising, upstream of said grasping device (40), a feeding device (20) of a continuous band-like reinforcing element (4) having a predetermined width and a cutting device (30) for cutting to size said reinforcing elements (5) from said continuous band-like reinforcing element (4).

18. Apparatus (100) according to claim 16 or 17, wherein said grasping device (40) comprises a suction cup holding device (41).

19. Apparatus (100) according to claim 16 or 17, wherein said grasping device (40) comprises an electromagnet holding device (41).

20. Apparatus (200) for depositing a reinforcing structure (1) on a substantially cylindrical forming support (50) in the building step of a carcass structure of a tyre for vehicle wheels, comprising:
- a grasping device (40) for grasping a reinforcing element (5) of a plurality of reinforcing elements having a predetermined width and same length;
- an assembling belt (60) adapted to receive said reinforcing elements (5) from said grasping device (40) along a predetermined deposition path, wherein said grasping device (40) is movable toward and away from said assembling belt (60) each time depositing on said assembling belt (60) a different reinforcing element (5) of said plurality of reinforcing elements in order to sequentially form on said assembling belt (60) a reinforcing structure (1) adapted to cover the entire circumferential extension of said forming support (50);
- a device (65) for repeatedly moving said assembling belt (60) by a predetermined pitch along said deposition path each time a reinforcing element (5) of said plurality of reinforcing elements is deposited on said assembling belt (60) by said grasping device (40), said pitch being calculated so as to allow depositing of a predetermined number of reinforcing elements (5) on said assembling belt (60) along said predetermined path at a distance from one another having a value comprised between 0 and a predetermined value.

21. Apparatus (200) according to claim 20, wherein said grasping device (40) comprises an electromagnet holding device (41).

22. Apparatus (200) according to claim 20 or 21, comprising a device for rotating said grasping device (40) about an axis of rotation (Y-Y) perpendicular to a lying plane of said reinforcing element (5) before the deposition on said assembling belt (60).

23. Apparatus (200) according to any one of claims from 20 to 22, comprising a device (65) for moving said assembling belt (60) at a linear speed substantially equal to the peripheral speed of said substantially cylindrical forming support (50).

24. Apparatus (200) according to any one of claims from 20 to 23, comprising an auxiliary element (52) for supporting an axially external annular portion of said reinforcing structure (1) projecting from an end portion (20a, 20b) of said at least one carcass ply (2) previously turned up for forming a substantially slipknot-wise portion containing at least one annular anchoring structure (3) therein.

25. Apparatus (200) according to any one of claims from 20 to 24, further comprising a pressing member adapted to exert a pressure on said reinforcing structure (1) once deposited on said end edge (2a, 2b) of said at least one carcass ply (2).

## Patentansprüche

1. Verfahren zum Herstellen von Reifen für Fahrzeugräder mit dem Schritt des Aufbauens auf einem im Wesentlichen zylindrischen formenden Lager (50) einer Karkassenstruktur mit wenigstens einer Karkassenlage (2), die an axial gegenüberliegenden Endkanten (2a, 2b) jeweilige ringförmige Verankerungsstrukturen (3) zugeordnet hat, wobei der Schritt des Aufbauens der Karkassenstruktur den Schritt des Zuordnens an wenigstens einer Endkante (2a, 2b) der wenigstens einen Karkassenlage (2) wenigstens einer Verstärkungsstruktur (1) mit einer vorher festgelegten Anzahl an Verstärkungselementen (5) mit einer vorher festgelegten Breite und der gleichen Länge, aufweist, wobei jedes der Verstärkungselemente (5) eine oder mehrere fadenähnliche Verstärkungselemente aufweist, die im Wesentlichen parallel zueinander sind und die jeweils eingebettet sind in oder beschichtet sind mit einer Schicht aus Elastomermaterial, wobei die Verstärkungselemente (5) nacheinander entlang eines Ablegewegs mit einem Abstand zueinander angeordnet werden, der einen Wert hat, der zwischen 0 und einem vorher festgelegten Wert liegt, wobei sich der Ablegeweg entlang einer Umfangsrichtung des formenden Lagers (50) erstreckt.

2. Verfahren nach Anspruch 1, bei dem die Verstärkungselemente (5) erhalten werden, indem wenigstens ein kontinuierliches bandähnliches Verstärkungselement (4) mit einer vorher festgelegten Breite auf Maß geschnitten wird.

3. Verfahren nach Anspruch 1 oder 2, bei dem die Länge der Verstärkungselemente (5) zwischen ungefähr 1 mm und ungefähr 100 mm liegt.

4. Verfahren nach einem der vorherigen Ansprüche, bei dem die Länge der Verstärkungselemente (5) zwischen ungefähr 30 mm und ungefähr 60 mm liegt.

5. Verfahren nach einem der vorherigen Ansprüche, bei dem der Abstand entlang des Ablegewegs konstant ist.

6. Verfahren nach einem der vorherigen Ansprüche, bei dem der Wert des Abstands zwischen ungefähr 0 mm und ungefähr 15 mm, geteilt durch die Anzahl der Verstärkungselemente (5), welche die Verstärkungsstruktur (1) definieren, liegt.

7. Verfahren nach einem der Ansprüche 2 bis 6, bei dem das auf Maß Schneiden mit einem Schneidwinkel (α) größer als 0 ausgeführt wird.

8. Verfahren nach Anspruch 7, bei dem der Schneidwinkel zwischen ungefähr 15° und ungefähr 90° liegt.

9. Verfahren nach Anspruch 7, bei dem der Schneidwinkel zwischen ungefähr 20° und ungefähr 50° liegt.

10. Verfahren nach einem der vorherigen Ansprüche, bei dem die Verstärkungselemente (5) an der wenigstens einen Endkante (2a, 2b) der wenigstens einen Karkassenlage (2) an einer in Bezug auf eine jeweilige ringförmige Verankerungsstruktur (3) axial inneren Position angeordnet sind.

11. Verfahren nach einem der Ansprüche 1 bis 9, bei dem die Verstärkungselemente (5) an der wenigstens einen Endkante (2a, 2b) der wenigstens einen Karkassenlage (2) an einer in Bezug auf eine jeweilige ringförmige Verankerungsstruktur (3) axial äußeren Position angeordnet sind.

12. Verfahren nach Anspruch 11, bei dem die wenigstens eine Endkante (2a, 2b) der wenigstens einen Karkassenlage (2) einen Endabschnitt (20a, 20b) aufweist, der dafür angepasst ist, herumgebogen zu werden, um somit einen im Wesentlichen laufknotenartigen Abschnitt zu bilden, der die ringförmige Verankerungsstruktur (3) aufweist, wobei die Verstärkungsstruktur (1) an dem Endabschnitt (20a, 20b) angeordnet wird, bevor der Endabschnitt (20a, 20b) herumgebogen wird.

13. Verfahren nach Anspruch 11, bei dem die wenigstens eine Endkante (2a, 2b) der wenigstens einen Karkassenlage (2) einen Endabschnitt (20a, 20b) aufweist, der dafür angepasst ist, so herumgebogen zu werden, dass er einen im Wesentlichen laufknotenartigen Abschnitt definiert, der die ringförmige Verankerungsstruktur (3) aufweist, wobei die Verstärkungsstruktur (1) an dem Endabschnitt (20a, 20b) angeordnet wird, nachdem der Endabschnitt (20a, 20b) herumgebogen wurde.

14. Verfahren nach einem der Ansprüche 2 bis 13, bei dem die Verstärkungs struktur (1) durch diese Schritte ausgebildet wird:
- auf Maß Schneiden eines Verstärkungselements (5) aus dem kontinuierlichen bandähnlichen Verstärkungselement (4);
- Ablegen des Verstärkungselements (5) auf einem Ablegeweg, der an der wenigstens einen Endkante (2a, 2b) der wenigstens einen Karkassenlage (2) definiert ist;
- Wiederholen des Schneide- und Ablegeschritts vorher festgelegt oft, wobei bei jedem Mal das im Wesentlichen zylindrische formende Lager (50) um einen Abstand bewegt wird, der gleich der Summe aus der Länge des Verstärkungselements (5) und dem vorher festgelegten Abstand entlang des Ablegewegs ist, um somit eine vorher festgelegte Anzahl an Verstärkungselementen (5) auf dem Ablegeweg abzulegen.

15. Verfahren nach einem der Ansprüche 2 bis 13, bei dem die Verstärkungsstruktur (1) durch diese Schritte ausgebildet wird;
- auf Maß Schneiden eines Verstärkungselements (5) aus dem kontinuierlichen bandähnlichen Verstärkungselement (4);
- Ablegen des Verstärkungselements (5) auf einem Ablegeweg, der auf einem Zusammenbauband (60) definiert ist;
- Wiederholen der Schneide- und Ablegeschritte vorher festgelegt oft, wobei jedes Mal das Zusammenbauband (60) um einen Abstand bewegt wird, der gleich der Summe aus der Länge des Verstärkungselements (5) und dem vorher festgelegten Abstand entlang des Ablegewegs ist, um somit eine vorher festgelegte Anzahl an Verstärkungselementen (5) auf dem Ablegeweg abzulegen, um somit die Verstärkungsstruktur (1) auf dem Zusammenbauband (60) zu bilden;
- Anordnen des Zusammenbaubands (60) in der Nähe des im Wesentlichen zylindrischen formenden Lagers (50);
- Bewegen des Zusammenbaubands (60) mit einer vorher festgelegten linearen Geschwindigkeit und des im Wesentlichen zylindrischen formenden Lagers (60) mit einer vorher festgelegten Umfangsgeschwindigkeit, die im Wesentlichen gleich der vorher festgelegten linearen Geschwindigkeit ist;
- Übertragen der Verstärkungsstruktur (1) von dem Zusammenbauband (60) auf das im Wesentlichen zylindrische formende Lager (60).

16. Vorrichtung (100) zum Ablegen einer Verstärkungsstruktur (1) auf einem im Wesentlichen zylindrischen formenden Lager (50) beim Aufbauschritt einer Karkassenstruktur eines Reifens für Fahrzeugräder, mit:
- einer Greifeinrichtung (40) zum Greifen eines Verstärkungselements (5) von mehreren Verstärkungselementen, die eine vorher festgelegte Breite und die gleiche Länge aufweisen, und zum Ablegen des Verstärkungselements (5) an einer Endkante (2a, 2b) einer Karkassenlage (2), die einem im Wesentlichen zylindrischen formenden Lager (50) einer Karkassenstruktur zugeordnet ist, wobei die Greifeinrichtung (40) hin zu und weg von dem formenden Lager (50) beweglich ist, wobei sie jedes Mal auf dem formenden Lager (50) ein anderes Verstärkungselement (5) der mehreren Verstärkungselemente ablegt, um somit nach und nach auf dem formenden Lager (50) eine Verstärkungsstruktur (1) auszubilden, die den gesamten Umfang des formenden Lagers (50) bedeckt;
- einer Einrichtung (55) zum wiederholten Bewegen des im Wesentlichen zylindrischen formenden Lagers (50) um einen vorher festgelegten Abstand entlang eines vorher festgelegten Ablegewegs, wobei jedes Mal ein Verstärkungselement (5) der mehreren Verstärkungselemente auf dem formenden Lager (50) durch die Greifeinrichtung (40) abgelegt wird, wobei der Abstand so berechnet ist, dass er das Ablegen einer vorher festgelegten Anzahl an Verstärkungselementen (5) an der Endkante (2a, 2b) der wenigstens einen Karkassenlage (2) entlang des Ablegewegs mit einem Abstand voneinander ermöglicht, der einen Wert zwischen 0 und einem vorher festgelegten Wert aufweist.

17. Vorrichtung (100) nach Anspruch 16, mit einer Zuführeinrichtung (20) eines kontinuierlichen bandähnlichen Verstärkungselements (4) mit einer vorher festgelegten Breite vorgelagert zu der Greifeinrichtung (40) und mit einer Schneideinrichtung (30) zum auf Maß Schneiden der Verstärkungselemente (5) aus dem kontinuierlichen bandähnlichen Verstärkungselement (4).

18. Vorrichtung (100) nach Anspruch 16 oder 17, bei dem die Greifeinrichtung (40) eine Saugnapfhalteeinrichtung (41) aufweist.

19. Vorrichtung (100) nach Anspruch 16 oder 17, bei dem die Greifeinrichtung (40) eine elektromagnetische Halteeinrichtung (41) aufweist.

20. Vorrichtung (200) zum Ablegen einer Verstärkungsstruktur (1) auf einem im Wesentlichen zylindrischen formenden Lager (50) beim Aufbauschritt einer Karkassenstruktur eines Reifens für Fahrzeugräder, mit:
- einer Greifeinrichtung (40) zum Greifen eines Verstärkungselements (5) von mehreren Verstärkungselementen, die eine vorher festgelegte Breite und die gleiche Länge aufweisen;
- einem Zusammenbauband (60), das dafür angepasst ist, die Verstärkungselemente (5) von der Greifeinrichtung (40) entlang eines vorher festgelegten Ablegewegs aufzunehmen, wobei die Greifeinrichtung (40) hin zu und weg von dem Zusammenbauband (60) beweglich ist, wobei sie jedes Mal auf dem Zusammenbauband (60) ein anderes Verstärkungselement (5) der mehreren Verstärkungselemente ablegt, um so nach und nach auf dem Zusammenbauband (60) eine Verstärkungsstruktur (1) zu bilden, die dafür angepasst ist, den gesamten Umfang des formenden Lagers (50) zu bedecken;
- einer Einrichtung (65) zum wiederholten Bewegen des Zusammenbaubands (60) um einen vorher festgelegten Abstand entlang des Ablegewegs, wobei jedes Mal ein Verstärkungselement (5) der mehreren Verstärkungselemente auf dem Zusammenbauband (60) durch die Greifeinrichtung (40) abgelegt wird, wobei der Abstand so berechnet ist, dass er es ermöglicht, dass eine vorher festgelegte Anzahl an Verstärkungselementen (5) auf dem Zusammenbauband (60) entlang des vorher festgelegten Wegs mit einem Abstand zueinander abgelegt wird, der einen Wert aufweist, der zwischen 0 und einem vorher festgelegten Wert liegt.

21. Vorrichtung (200) nach Anspruch 20, bei dem die Greifeinrichtung (40) eine elektromagnetische Halteeinrichtung (41) aufweist.

22. Vorrichtung (200) nach Anspruch 20 oder 21 mit einer Einrichtung zum Drehen der Greifeinrichtung (40) um eine Drehachse (Y-Y), die senkrecht zu einer Liegeebene des Verstärkungselements (5) vor dem Ablegen auf dem Zusammenbauband (60) ist.

23. Vorrichtung (200) nach einem der Ansprüche 20 bis 22 mit einer Einrichtung (65) zum Bewegen des Zusammenbaubands (60) mit einer linearen Geschwindigkeit, die im Wesentlichen gleich der Umfangsgeschwindigkeit des im Wesentlichen zylindrischen formenden Lagers (50) ist.

24. Vorrichtung (200) nach einem der Ansprüche 20 bis 23 mit einem Hilfselement (52) zum Abstützen eines axial äußeren ringförmigen Abschnitts der Verstärkungsstruktur (1), die von einem Endabschnitt (20a, 20b) der wenigstens einen Karkassenlage (2) hervorragt, die vorher herumgebogen wurde, um einen im Wesentlichen laufknotenartigen Abschnitt auszubilden, der wenigstens eine ringförmige Verankerungsstruktur (3) darin enthält.

25. Vorrichtung (200) nach einem der Ansprüche 20 bis 24, ferner mit einem Drückelement, das dafür angepasst ist, einen Druck auf die Verstärkungsstruktur (1) auszuüben, sobald diese einmal an der Endkante (2a, 2b) der wenigstens einen Karkassenlage (2) abgelegt worden ist.

## Revendications

1. Procédé de fabrication de pneus pour roues de véhicules, comprenant l'étape de fabrication, sur un support formant sensiblement cylindrique (50), d'une structure de carcasse comprenant au moins une nappe de carcasse (2) associée, à ses bords d'extrémité (2a, 2b) axialement opposés, avec des structures d'ancrage annulaires (3) respectives, dans lequel l'étape de fabrication de la structure de carcasse comprend l'étape d'associer, à au moins un bord d'extrémité (2a, 2b) de ladite au moins une nappe de carcasse (2), au moins une structure de renfort (1) comprenant un nombre prédéterminé d'éléments de renfort (5) ayant une largeur prédéterminée et de même longueur, chacun desdits éléments de renfort (5) comprenant un ou plusieurs éléments de renfort filiformes qui sont sensiblement parallèles entre eux et qui sont incorporés dans, ou enduits par, une couche de matériau élastomère, lesdits éléments de renfort (5) étant successivement disposés le long une trajectoire de dépôt à une distance les uns des autres ayant une valeur comprise entre 0 et une valeur prédéterminée, ladite trajectoire de dépôt s'étendant le long d'une direction circonférentielle du support formant (50).

2. Procédé selon la revendication 1, dans lequel lesdits éléments de renfort (5) sont obtenus par découpe sur mesure d'au moins un élément de renfort continu (4) en forme de bande ayant une largeur prédéterminée.

3. Procédé selon la revendication 1 ou 2, dans lequel la longueur desdits éléments de renfort (5) est comprise entre environ 1 mm et environ 100 mm.

4. Procédé selon l'une quelconque des revendications précédentes, dans laquelle la longueur desdits éléments de renfort (5) est comprise entre environ 30 mm et environ 60 mm.

5. Procédé selon l'une quelconque des revendications précédentes, dans lequel ladite distance est constante le long de ladite trajectoire de dépôt.

6. Procédé selon l'une quelconque des revendications précédentes, dans lequel la valeur de ladite distance est comprise entre environ 0 mm et environ 15 mm, divisé par le nombre d'éléments de renfort (5) qui définissent ladite structure de renfort (1).

7. Procédé selon l'une quelconque des revendications de 2 à 6, dans lequel ladite découpe sur mesure est réalisée avec un angle de coupe (α) supérieur à 0.

8. Procédé selon la revendication 7, dans lequel ledit angle de coupe (α) est compris entre environ 15° et environ 90°.

9. Procédé selon la revendication 11, dans lequel ledit angle de coupe (α) est compris entre environ 20° et environ 50°.

10. Procédé selon l'une quelconque des revendications précédentes, dans lequel lesdits éléments de renfort (5) sont disposés sur ledit au moins un bord d'extrémité (2a, 2b) de ladite au moins une nappe de carcasse (2) dans une position axialement interne par rapport à une structure d'ancrage annulaire (3) respective.

11. Procédé selon l'une quelconque des revendications 1 à 9, dans lequel lesdits éléments de renfort (5) sont disposés sur ledit au moins un bord d'extrémité (2a, 2b) de ladite au moins une nappe de carcasse (2) dans une position axialement externe par rapport à une structure d'ancrage annulaire (3) respective.

12. Procédé selon la revendication 11, dans lequel ledit au moins un bord d'extrémité (2a, 2b) de ladite au moins une nappe de carcasse (2) comprend une partie d'extrémité (20a, 20b) apte à être retournée de manière à définir une partie sensiblement en lien coulissant contenant ladite structure d'ancrage annulaire (3), ladite structure de renfort (1) étant disposée sur ladite partie d'extrémité (20a, 20b) avant que ladite partie d'extrémité (20a, 20b) soit retournée.

13. Procédé selon la revendication 11, dans lequel ledit au moins un bord d'extrémité (2a, 2b) de ladite au moins une nappe de carcasse (2) comprend une partie d'extrémité (20a, 20b) apte à être retournée de manière à définir une partie sensiblement en lien coulissant comprenant ladite structure d'ancrage annulaire (3), ladite structure de renfort (1) étant disposée sur ladite partie d'extrémité (20a, 20b) après que ladite partie d'extrémité (20a, 20b) ait été retournée.

14. Procédé selon une quelconque des revendications 2 à 13, dans lequel ladite structure de renfort (1) est formée par les étapes suivantes :
- découpe sur mesure d'un élément de renfort (5) à partir dudit élément de renfort continu en forme de bande (4) ;
- dépôt dudit élément de renfort (5) sur une trajectoire de dépôt définie sur ledit au moins un bord d'extrémité (2a, 2b) de ladite au moins une nappe de carcasse (2) ;
- répétition desdites étapes de découpe et de dépôt selon un nombre prédéterminé de fois, en déplaçant à chaque fois le support formant sensiblement cylindrique (50) d'un pas égal à la somme de la longueur dudit élément de renfort (5) et de ladite distance prédéterminée le long de ladite trajectoire de dépôt afin de déposer un nombre prédéterminé d'éléments de renfort (5) sur ladite trajectoire de dépôt.

15. Procédé selon une quelconque des revendications 2 à 13, dans lequel ladite structure de renfort (1) est formée par les étapes suivantes :
- découpe sur mesure d'un élément de renfort (5) dudit élément de renfort continu en forme de bande (4) ;
- dépose dudit élément de renfort (5) sur une trajectoire de dépôt définie sur une courroie d'assemblage (60);
- répétition desdites étapes de découpe et de dépôt selon un nombre prédéterminé de fois, en déplaçant à chaque fois ladite courroie d'assemblage (60) d'un pas égal à la somme de la longueur dudit élément de renfort (5) et de ladite distance prédéterminée le long de ladite trajectoire de dépôt afin de déposer un nombre prédéterminé d'éléments de renfort (5) sur ladite trajectoire de dépôt, formant ainsi ladite structure de renfort (1) sur ladite courroie d'assemblage (60) ;
- mise en place de ladite courroie d'assemblage (60) à proximité de dudit support formant sensiblement cylindrique (50) ;
- déplacement de ladite courroie d'assemblage (60) à une vitesse linéaire prédéterminée et dudit support formant sensiblement cylindrique (50) à une vitesse périphérique prédéterminée sensiblement égale à ladite vitesse linéaire prédéterminée ;
- transfert de ladite structure de renfort (1) depuis ladite courroie d'assemblage (60) vers ledit support formant sensiblement cylindrique (50).

16. Appareil (100) pour le dépôt d'une structure de renfort (1) sur un support formant sensiblement cylindrique (50) dans l'étape de fabrication d'une structure de carcasse d'un pneu pour roues de véhicules, comprenant :
- un dispositif de préhension (40) pour saisir un élément de renfort (5) parmi plusieurs éléments de renfort ayant une largeur prédéterminée et une même longueur et pour déposer ledit élément de renfort (5) sur un bord d'extrémité (2a, 2b) d'une nappe carcasse (2) associée à un support formant sensiblement cylindrique (50) d'une structure de carcasse, ledit dispositif de préhension (40) étant déplaçable vers et en s'éloignant dudit support formant (50) en déposant à chaque fois sur ledit support formant (50) un élément de renfort (5) différent parmi lesdits plusieurs éléments de renfort afin de former séquentiellement sur ledit support formant (50) une structure de renfort (1) qui couvre l'entière étendue circonférentielle dudit support formant (50) ;
- un dispositif (55) pour déplacer à plusieurs reprises ledit support formant sensiblement cylindrique (50) d'un pas prédéterminé le long d'une trajectoire de dépôt prédéterminée, chaque fois qu'un élément de renfort (5) parmi lesdits plusieurs éléments de renfort est déposé sur ledit support formant (50) par ledit dispositif de préhension (40), ledit pas étant calculé afin de permettre le dépôt d'un nombre prédéterminé desdits éléments de renfort (5) sur ledit bord d'extrémité (2a, 2b) de ladite au moins une nappe de carcasse (2) le long de ladite trajectoire de dépôt à une distance l'un de l'autre ayant une valeur comprise entre 0 et une valeur prédéterminée.

17. Appareil (100) selon la revendication 16, comprenant, en amont dudit dispositif de préhension (40), un dispositif d'alimentation (20) d'un élément de renfort continu en forme de bande (4) ayant une largeur prédéterminée et une dispositif de découpe (30) pour la découpe sur mesure de ces éléments de renfort (5) à partir dudit élément de renfort continu en forme de bande (4),

18. Appareil (100) selon la revendication de 16 ou 17, dans lequel ledit dispositif de préhension (40) comprend un dispositif de ventouse de maintien (41).

19. Appareil (100) selon la revendication de 16 ou 17, dans lequel ledit dispositif de préhension (40) comprend un dispositif de retenue électromagnétique (41).

20. Appareil (200) pour le dépôt d'une structure de renfort (1) sur un support formant sensiblement cylindrique (50) dans l'étape de fabrication d'une structure de carcasse d'un pneu pour roues de véhicules, comprenant :
- un dispositif de préhension (40) pour saisir un élément de renfort (5) parmi une pluralité d'éléments de renfort ayant une largeur prédéterminée et une même longueur ;
- un courroie d'assemblage (60) apte à recevoir lesdits éléments de renfort (5) depuis ledit dispositif de préhension (40) le long d'une trajectoire de dépôt prédéterminée, dans lequel ledit dispositif de préhension (40) est déplaçable vers et en s'éloignant de ladite courroie d'assemblage (40) en déposant à chaque fois sur ladite courroie d'assemblage (40) un élément de renfort (5) différent parmi ladite pluralité d'éléments de renfort afin de former séquentiellement sur ladite courroie d'assemblage (40) une structure de renfort (1) apte à couvrir l'entière étendue circonférentielle dudit support formant (50) ;
- un dispositif (65) pour déplacer de façon répétée ladite courroie d'assemblage (60) d'un pas prédéterminé le long de ladite trajectoire de dépôt, chaque fois qu'un élément de renfort (5) parmi lesdits plusieurs éléments de renfort est déposé sur ladite courroie d'assemblage (60) par ledit dispositif de préhension (40), ledit pas étant calculé afin de permettre le dépôt d'un nombre prédéterminé d'éléments de renfort (5) sur ladite courroie d'assemblage (60) le long de ladite trajectoire prédéterminée à une distance l'un de l'autre ayant une valeur comprise entre 0 et une valeur prédéterminée.

21. Appareil (200) selon la revendication 20, dans lequel ledit dispositif de préhension (40) comprend un dispositif de retenue électromagnétique (41).

22. Appareil (200) selon la revendication 20 ou 21, comprenant un dispositif pour faire tourner ledit dispositif de préhension (40) autour d'un axe de rotation (Y-Y) perpendiculaire à un plan sur lequel repose ledit élément de renfort (5) avant le dépôt sur ladite courroie d'assemblage (60).

23. Appareil (200) selon l'une quelconque des revendications de 20 à 22, comprenant un dispositif (65) pour déplacer ladite courroie d'assemblage (60) à une vitesse linéaire sensiblement égale à la vitesse périphérique dudit support formant sensiblement cylindrique (50).

24. Appareil (200) selon l'une quelconque des revendications de 20 à 23, comprenant un élément auxiliaire (52) pour soutenir une partie annulaire axialement externe de ladite structure de renfort (1) faisant saillie à partir d'une partie d'extrémité (20a, 20b) de ladite au moins une nappe de carcasse (2) préalablement retournée pour former une partie sensiblement en lien coulissant contenant en son intérieur au moins une structure d'ancrage annulaire (3).

25. Appareil (200) selon l'une quelconque des revendications de 20 à 24, comprenant en outre un organe presseur apte à exercer une pression sur ladite structure de renfort (1) une fois déposée sur ledit bord d'extrémité (2a, 2b) de ladite au moins une nappe de carcasse (2).
